# EUROPEAN PATENT SPECIFICATION

(11) **EP 2 244 557 B1**
(45) Date of publication and mention of the grant of the patent: **28.11.2018**
(21) Application number: 09713433.2
(22) Date of filing: 04.02.2009
(51) Int. Cl.: A01J 5/04, A01J 7/02

(54) **MILK COLLECTION DEVICE**
MILCHSAMMELVORRICHTUNG
DISPOSITIF DE COLLECTE DE LAIT

(30) Priority: 18.02.2008 NL 1035034
(43) Date of publication of application: 03.11.2010
(73) Proprietor: Lely Patent N.V., 3147 PB Maassluis (NL)
(72) Inventor: NEWTON, Gerrit, Vernon, Jessup, NL-3147 PA Maassluis (NL)
(74) Representative: Octrooibureau Van der Lely N.V.
(86) International application number: PCT/NL2009/000024
(87) International publication number: WO 2009/104952

(56) References cited:
- EP-A- 0 459 817
- EP-A- 0 951 822
- WO-A-2007/129888
- DE-U- 1 793 982
- GB-A- 2 049 624

## Description

The invention relates to a milk collection device comprising a milk collection container having a rinsing liquid supply line, at least one milk supply, a vacuum discharge tube and a liquid discharge on the bottom side of the container, wherein the rinsing liquid supply is provided atop the milk collection container and separated from the vacuum discharge tube, and is arranged to guide the rinsing liquid substantially along a wall of the milk collection container, wherein the rinsing liquid supply is arranged to wash around the vacuum discharge tube with rinsing liquid on at least two sides, see e.g. EP 0 951 822 A2.

Such a milk collection device is known and is marketed for example by the company Lely Industries N.V. in a milking device with the name Astronaut A3. This milking device comprises, in addition to teat cups, means to apply these and a vacuum system, a milk collection container. The latter is sometimes referred to as milk jar and should not be confused with the milk tank, which is meant for final storage. The milk collection container of the known milk collection device has a vacuum discharge tube placed centrally atop of it, a rinsing liquid supply on one side and, on the opposite side, four milk tube connections stemming from the four teat cups.

A disadvantage of the known milk collection device is that a part of the milk collection container cannot be cleaned properly upon rinsing of the milk collection container, which may have detrimental consequences for the milk quality.

It is an object of the present invention to provide a milk collection device wherein the milk collection container is rinsed more effectively and, thus, to ensure an improved milk quality.

The invention achieves this object by means of a milk collection device according to claim 1, which is characterized in that the rinsing liquid supply is arranged to provide, from at least two directions, rinsing liquid to the vacuum discharge tube, wherein the two directions enclose at least a right angle. It appears that a larger part of the milk collection container can be rinsed in this manner.

The fact is that in practice it has appeared that in the known milk collection device a kind of 'shadow' occurs behind the vacuum discharge tube, which cannot be reached by rinsing liquid, because the rinsing liquid is obstructed by the vacuum discharge tube, or even extracted by it. Consequently, the 'shadow area' will not be cleaned by the rinsing liquid, so that milk residues can deposit there, which is bound to lead to detrimental effects. By providing rinsing liquid according to the invention from a plurality of directions that are sufficiently different, there will only remain a shadow ('core shadow' or umbra) where the partial shadows or penumbrae from the different directions overlap one another. This core shadow is smaller than each of the partial shadows, so that the quality of cleaning and, hence, the milk quality is improved. Here, providing from an opening of a conduit should be interpreted as providing from one direction, in particular the average direction.

If the two directions enclose a right angle, the core shadow is already very small. Advantageously, the two directions substantially enclose a straight angle, i.e. at least 160° and, more advantageously, 180°. As a result of this, the core shadow is reduced to almost nil.

It should be noted here that a milk jar is known from GB2049624, wherein vacuum can be discharged, or rinsing liquid supplied through one and the same conduit. In this case, a non-return valve ensures that the vacuum passage is largely closed off upon supplying rinsing liquid and that there remains only a small passage, along a dispersion plate, so that the liquid can flow along the wall of the milk jar. However, this device is unfit for simultaneous discharge of vacuum and supply of rinsing liquid. This is advantageous, however, because in this manner the vacuum discharge tube can support the rinsing liquid flow, thus for example increasing the cleaning power. Moreover, in principle, an additional pump for the rinsing liquid need not be provided, because the vacuum system that is available as it is can also be used for the supply of rinsing liquid, so that a simpler layout of the total system is possible. Contrary to this known device, the device according to the present invention is actually suitable for simultaneous discharge of vacuum and supply of rinsing liquid.

Some embodiments according to the present invention are arranged to provide rinsing liquid from two directions in that they comprise two rinsing liquid lines that flow out into the milk collection container. Other advantageous embodiments comprise at least three rinsing liquid supply openings around the vacuum discharge tube, in particular spread regularly around the vacuum discharge tube. Because of this, not only can every remainder of the core shadow be removed, but in addition a larger portion of the milk collection container can be rinsed from a plurality of directions, which further improves the cleaning result. More than two directions, with a corresponding number of openings, are possible as well.

In embodiments, but not according to the invention, the rinsing liquid supply is provided as a concentric conduit around the vacuum discharge tube. In particular, the rinsing liquid supply is provided as a concentric chink around the vacuum discharge tube. This provides not only the advantage that the vacuum discharge tube is washed around from all directions, thus eliminating the occurrence of a shadow, but at the same time it provides the advantage that the number of rinsing liquid supply openings needed to that effect is restricted as much as possible, i.e. basically to one, although the chink in itself may be split up in a plurality of partial chinks. Strictly speaking, in this embodiment, the rinsing liquid does not necessarily have to be washed to the vacuum discharge tube. If there is a certain distance between the supply and discharge, for example because of a level wall segment, then that may still be useful. However, if there is only the thickness of a conduit wall between the supply chink and the vacuum discharge tube, then it is recommendable to supply rinsing liquid only away from the vacuum discharge tube.

In particular embodiments, the rinsing liquid supply connects to the milk collection container with a curvature, wherein the curvature shows an at least constant, and preferably steadily increasing curvature radius in the direction of the rinsing liquid supply to the milk collection container. Such an embodiment ensures that the rinsing liquid flow is guided effectively along the wall of the milk collection container and that it washes the latter out. To achieve this, a 'trumpet-shaped' design of the connection between the supply and the milk collection container may be envisaged. As an alternative, the rinsing liquid supply may also be differently arranged to guide the liquid along the wall, for example by means of a dispersion plate. Advantageously, the dispersion plate is fastened to the vacuum discharge tube, or the vacuum discharge tube has an outflow outlet that is either widened or bent outwards, in the fashion of a dispersion plate. All of these embodiments support the adhesion of the rinsing liquid to the wall of the milk collection container.

In particular embodiments, the rinsing liquid supply is arranged to provide the rinsing liquid in the milk collection container with a speed component that is perpendicular to an axial direction of the vacuum discharge tube, at the point where it connects to the milk collection container. With these embodiments, the rinsing liquid is provided, as it were, in a 'whirling' or 'rotating' manner, which ensures at the same time that the liquid is properly guided along the wall of the milk collection container. In addition, the rinsing liquid will be guided entirely or substantially along the wall of the rinsing liquid supply. In particular in the case of the concentric conduit or chink around the vacuum discharge tube, this will increase the efficiency of the rinsing liquid supply.

According to an aspect, the invention provides a milking device comprising a milk collection device according to the invention, which milking device further comprises a box having a framework, on which is disposed a movable robot arm which is arranged to apply teat cups, which teat cups are connected to the milk collection container by means of one or more milk tubes. Such a milking device is pre-eminently suitable for automatic milking, for which device it is advantageous that the cleaning of the milk collection container can take place in an effective and reliable manner.

In relation to such automatic milking devices, which are also briefly named 'milking robots', embodiments are conceivable wherein a cow can access and leave the box through doors or gates that are disposed on the long side of the box. With such devices, two doors are disposed on one side. Obviously, these can be positioned on the left-hand or right-hand side. Accordingly, the robot arm and further means such as the milk collection container will be disposed on the respective opposite side. Due to such a mirror-wise configuration there is a possibility that the milk collection container should be disposed in two different orientations with the different embodiments. Therefore, advantageous embodiments according to the invention are characterized in that one or more milk tubes are connected to the milk collection container symmetrically to a plane A, wherein plane A is a plane perpendicular to the longitudinal direction of the box through the centre of the milk collection container. In particular, the milk tubes are connected to a side of the milk collection container that is averted from the box. With this embodiment, at least the milk tubes and the connection to the vacuum discharge tube and, essentially, the rinsing liquid supply as well may be provided symmetrically to plane A. In point of fact, that requires only one design of the milk collection container for both mirrored versions of the milking robot. This makes its production and assembly simpler and less error-prone. In itself, it is possible, also with a non-concentric configuration of the vacuum discharge tube and the rinsing liquid supply, to provide the aforementioned conduits and connections of the milk tubes onto the milk collection container symmetrically to plane A, but in that case many, at least more connections onto the milk collection container in plane A are provided, which increases the chance of obstruction due to the various tubes. With the embodiment according to the invention, this is the case to a lesser degree.

There is also provided, but not according to the invention, a method of cleaning a milk collection container in a milking device, which container comprises a rinsing liquid supply line, at least one milk supply, a vacuum discharge tube and a liquid discharge on the bottom side, wherein the rinsing liquid supply is provided atop the milk collection container and separated from the vacuum discharge tube, and is arranged to guide the rinsing liquid substantially along a wall of the milk collection container, in particular according to the invention, wherein the method comprises the steps of applying a vacuum by discharging air through the vacuum discharge tube and supplying rinsing liquid through the rinsing liquid supply, wherein, during the discharge of air, the rinsing liquid is supplied in the milk collection container by means of the rinsing liquid supply in such a manner that substantially the entire wall of the milk collection container is cleaned, in particular the wall portion of the milk collection container around the vacuum discharge tube. With this working method, the advantages of reducing the 'shadow' may be provided, while at the same time use can be made of the advantage of applying vacuum to the milk collection container during rinsing. It is noted one more time that the aforementioned GB document does not allow simultaneous application of vacuum and a rinsing liquid flow, at least not by means of the connections rendered.

Particularizations of this method are provided below. The associated advantages have already been treated with the corresponding layout claims and, consequently, they are not repeated.

Hereinafter, the invention will be explained by means of some nonlimiting exemplary embodiments and with reference to the drawing, in which:
Figure 1 is a schematic cross-section of a milk collection container of a milk collection device but not according to the invention;
Figure 2 is a schematic top view of an embodiment of the milk collection container but not according to the invention;
Figure 3 is a schematic top view of an embodiment of the milk collection container according to the invention;
Figure 4 is a schematic perspective view of an embodiment of the milk collection device but not according to the invention, and
Figure 5 is a schematic cross-sectional view of a milk collection container according to the invention.

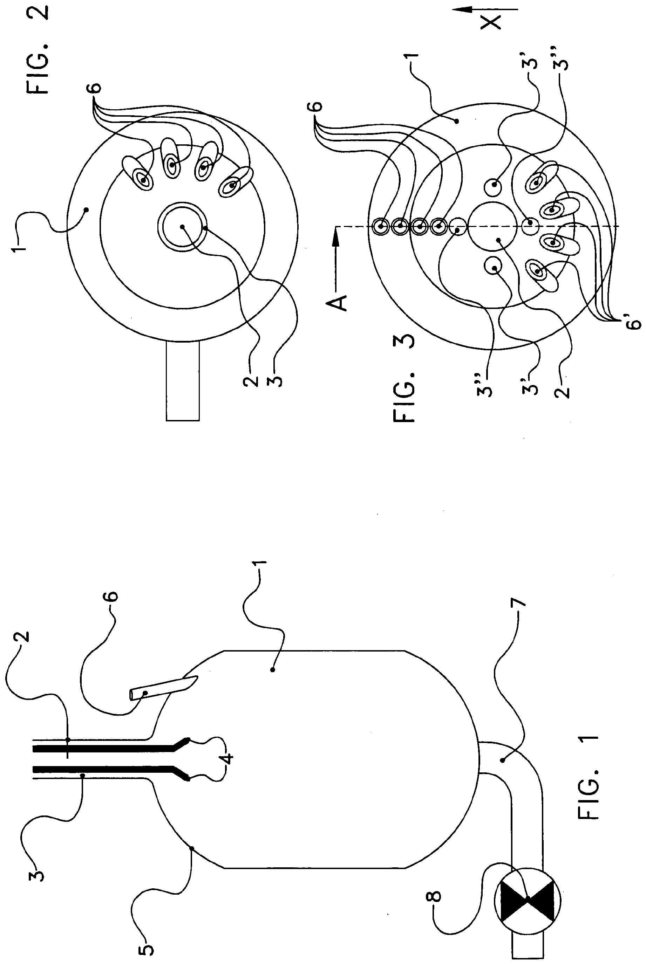

Figure 1 shows a schematic cross-section of an embodiment of the milk collection device but not according to the invention. In this figure, 1 is a milk collection container, having a vacuum discharge 2 and a rinsing supply 3 which is provided with a dispersion element 4 at its extremity. Numeral 5 denotes a neck, 6 a milk supply, 7 a milk discharge while numeral 8 denotes a valve.

The milk collection container 1 is notably the kind of milk jar that is used for milking devices. It is notably not a milk tank for bulk storage of milk. Into the milk collection container 1 a vacuum discharge 2 flows out, through which air can be discharged and hence, as it were, vacuum can be supplied. In this case, the vacuum discharge comprises a pipe or tube 2, which ends in a widening dispersion element 4. Although this dispersion element 4 is not necessary, it may be useful in facilitating the discharge of air from the milk collection container 1.

Concentrically around the vacuum discharge 2, a rinsing liquid supply 3 is provided for the supply of rinsing liquid to the inner wall of the milk collection container 1. To ensure effective spreading of the rinsing liquid across the inner wall, a neck 5 is provided between the rinsing liquid supply 3 and the milk collection container 1. The neck 5, starting from the rinsing liquid supply 3, shows a curvature radius that, preferably, increases, i.e. ends in a 'trumpet-shape'. Consequently, a gradual transition is provided so that there will be proper adhesion of rinsing liquid to the inner wall. It should be noted that in that case the rinsing liquid supply 3 ends in a chink between the dispersion element 4 and the neck 5.

At the bottom of the milk collection container 1, a milk discharge 7 is provided, which can be closed by means of a controllable valve 8. This milk discharge 7 may be connected with, for example, a bulk tank (not shown). Milk can be pumped from the milk collection container 1 by means of a pump that is suitable for liquids. It should be noted that such pumps are seldom suitable for building up vacuum as well. Consequently, the valve 8 will be closed most of the time when rinsing liquid is supplied through the rinsing liquid supply 3. In such a case, vacuum will be provided solely through the vacuum discharge 2. The purpose of this vacuum is to support the supply of rinsing liquid and to enhance its rinsing properties. Usually, there is no (excess) pressure at the rinsing liquid supply, or only a minor pressure, for example 0.5 bar. However, if a vacuum is applied of for example 0.5, or nearly 1 bar, then the total pressure difference is far greater and, hence, the rinsing liquid supply considerably stronger. For this, use is made only of those (vacuum) elements of the milking device that are present anyway.

Figure 2 shows a schematic top view of a milk collection device but not according to the invention. Herein, just like in all other figures of the drawing, corresponding components are indicated by the same reference numerals. It can be clearly seen that the rinsing liquid supply 3 constitutes a concentric conduit around the vacuum discharge 2. Furthermore, four milk supply lines 6 are rendered here, for example for a milking device for milking a cow, including four teat cups. Obviously, a joint milk supply 6 may also be provided.

Figure 3 shows a schematic top view of an embodiment of the milk collection device according to the invention. Hereby, the four milk supply lines 6 are provided in a plane A, in respect of which the vacuum discharge 2 and two rinsing liquid supply lines 3' are provided as well. As an option or addition, two rinsing liquid supply lines 3" may be provided. An advantage of such a milk collection device can be explained as follows. A milk collection device is usually disposed on one side of a box of an automatic milking device. Usually, this is the left-hand or right-hand side of such a box. The assumption is that in the exemplary embodiment shown in figure 3, the milking box is positioned in the direction marked by the arrow X. The connections for the milk supply lines 6, the vacuum discharge 2 and the rinsing liquid supply 3' are then provided symmetrically, as a result of which the connections for a mirror-symmetrical embodiment - with the milking box being positioned in the opposite direction - do not have to be re-routed. A comparison can, for example, be made with the embodiment in figure 2, wherein this configuration might give rise to problems in relation to the milk supply lines 6. In respect of the embodiment shown in figure 3 it may be noted that the alternative rinsing liquid supply lines 3" are also provided in plane A, as a result of which an entirely symmetrical configuration is provided. The four milk supply lines 6 might also be provided radially, i.e. on the arc of a circle around the centre of the vacuum discharge 2, as shown in figure 2, but then in a mirror-symmetrical configuration in respect of plane A. Especially if provided at a large distance from the centre, the milk supply by the milk supply lines 6 takes place substantially along the wall and, hence, with less formation of foam. One of these possible, alternative configurations is rendered by means of striped lines, by reference numeral 6'.

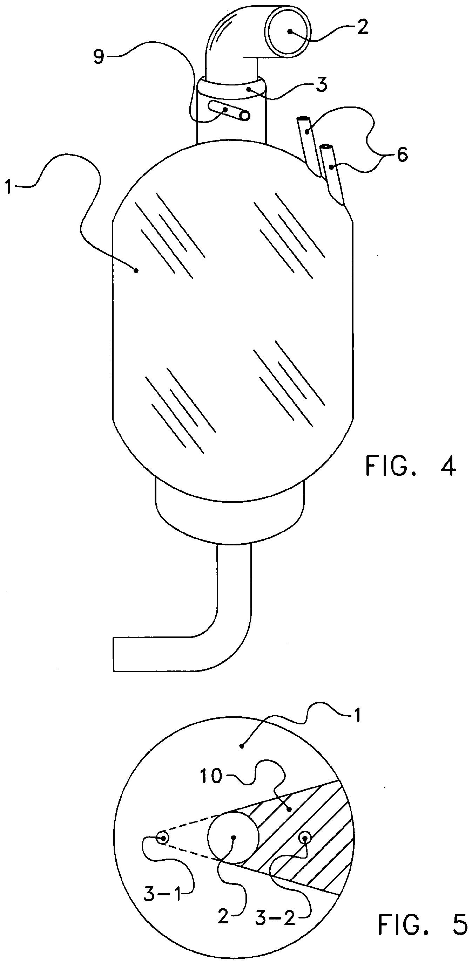

Figure 4 shows a schematic perspective view of the top side of a milk collection device but not according to the invention. Herein, 2 again denotes a vacuum discharge, which is surrounded by a rinsing liquid supply 3, onto which a rinsing liquid line 9 is connected eccentrically. It can be clearly seen that the supply of rinsing liquid takes place eccentrically in respect of the concentric vacuum discharge 2. This makes it simple to add a speed component to the rinsing liquid, which ensures that the rinsing liquid supply 3 provides the liquid in the milk collection container 1 in a somewhat whirling or rotating manner. This increases the 'adhesion' of the rinsing liquid to the wall of the container 1; at any rate it supports its movement along the wall of the container.

Figure 5 shows a schematic view of an embodiment of the milk collection device according to the invention. In this figure 5, the functioning of the invention is explained schematically. Again, 2 denotes a vacuum discharge. Rinsing liquid is supplied through the rinsing liquid supply 3-1. This figure is based upon the assumption that the rinsing liquid's movement does not involve a component for rotation or whirling. In principle, it will be possible for the rinsing liquid to reach the entire wall of the milk collection container 1, with the exception of the shaded area 10, also referred to as 'shadow'. It can be clearly seen that the rinsing liquid supply 3-2 can furnish (well-nigh) the full shadow area 10 with rinsing liquid. Moreover, rinsing liquid will be applied from at least two directions to a major portion of the wall of the milk collection container 1, which may enhance the cleaning effect. It should be noted that in case of supply of a rinsing liquid of which the movement includes a rotation component, the shadow may have a different shape, but that its total elimination is not possible.

Furthermore, it is noted here that details of milking devices without any further bearing on the invention have been left out, such as robot arms, teat cups, vacuum pumps, boxes etc. For these, reference is made to the known manuals in this field. Finally, it is noted that the exemplary embodiments shown are not to be interpreted in a limiting sense, but that they only serve as examples of the scope of protection, which is defined in the accompanying claims.

## Claims

1. Milk collection device comprising a milk collection container (1) having a rinsing liquid supply line (3), at least one milk supply (6), a vacuum discharge tube (2) and a liquid discharge (7) on the bottom side of the container, wherein the rinsing liquid supply is provided atop the milk collection container and separated from the vacuum discharge tube, and is arranged to guide the rinsing liquid substantially along a wall of the milk collection container,
wherein the rinsing liquid supply is arranged to wash around the vacuum discharge tube with rinsing liquid on at least two sides, **characterized in that** the rinsing liquid supply (3', 3"; 3-1, 3-2) is arranged to provide, from at least two directions, rinsing liquid to the vacuum discharge tube (2), wherein the two directions enclose at least a right angle.

2. Milk collection device according to claim 1, wherein the two directions substantially enclose a straight angle.

3. Milk collection device according to any one of the preceding claims, comprising at least three rinsing liquid supply openings around the vacuum discharge tube.

4. Milk collection device according to any one of the preceding claims,
wherein the rinsing liquid supply is provided as a concentric conduit, in particular a concentric chink, around the vacuum discharge tube.

5. Milk collection device according to any one of the preceding claims,
wherein the rinsing liquid supply connects to the milk collection container with a curvature, wherein the curvature shows an at least constant, and preferably steadily increasing curvature radius in the direction of the rinsing liquid supply to the milk collection container.

6. Milk collection device according to any one of the preceding claims,
wherein the rinsing liquid supply is arranged to provide the rinsing liquid in the milk collection container with a speed component that is perpendicular to an axial direction of the vacuum discharge tube, at the point where it connects to the milk collection container.

7. Milking device comprising a milk collection device according to any one of the preceding claims, which milking device further comprises a box having a framework, on which is disposed a movable robot arm which is arranged to apply teat cups, which teat cups are connected to the milk collection container by means of one or more milk tubes.

8. Milking device according to claim 7, wherein the one or more milk tubes are connected to the milk collection container symmetrically to a plane A, wherein plane A is a plane perpendicular to the longitudinal direction of the box through the centre of the milk collection container.

## Patentansprüche

1. Milchsammelvorrichtung, umfassend einen Milchsammelbehälter (1) mit einer Spülflüssigkeitszuführungsleitung (3), mindestens einer Milchzufuhr (6), einer Vakuumablassleitung (2) und einem Flüssigkeitsablauf (7) auf der Unterseite des Behälters,
wobei die Spülflüssigkeitszuführung über dem Milchsammelbehälter vorgesehen ist und von der Vakuumablassleitung getrennt ist, und eingerichtet ist, die Spülflüssigkeit im Wesentlichen entlang einer Wand des Milchsammelbehälters zu führen,
wobei die Spülflüssigkeitszuführung eingerichtet ist, die Vakuumablassleitung auf mindestens zwei Seiten mit Spülflüssigkeit zu umspülen, **dadurch gekennzeichnet, dass** die Spülflüssigkeitszuführung (3', 3"; 3-1, 3-2) eingerichtet ist, um aus mindestens zwei Richtungen der Vakuumablassleitung (2) Spülflüssigkeit zuzuführen,
wobei die zwei Richtungen mindestens einen rechten Winkel einschließen.

2. Milchsammelvorrichtung nach Anspruch 1, wobei die zwei Richtungen im Wesentlichen einen gestreckten Winkel einschließen.

3. Milchsammelvorrichtung nach einem der vorhergehenden Ansprüche, umfassend mindestens drei Spülflüssigkeitszuführöffnungen um die Vakuumablassleitung herum.

4. Milchsammelvorrichtung nach einem der vorhergehenden Ansprüche, wobei die Spülflüssigkeitszuführung als eine konzentrische Leitung, insbesondere ein konzentrischer Spalt um die Vakuumablassleitung herum vorgesehen ist.

5. Milchsammelvorrichtung nach einem der vorhergehenden Ansprüche, wobei die Spülflüssigkeitszuführung sich an den Milchsammelbehälter mit einer Kurvatur anschließt, wobei die Kurvatur einen mindestens konstanten und vorzugsweise stetig zunehmenden Kurvaturradius in der Richtung der Spülflüssigkeitszuführung zu dem Milchsammelbehälter zeigt.

6. Milchsammelvorrichtung nach einem der vorhergehenden Ansprüche, wobei die Spülflüssigkeitszuführung eingerichtet ist, die Spülflüssigkeit in den Milchsammelbehälter mit einer Geschwindigkeitskomponente zu liefern, die senkrecht zu einer axialen Richtung der Vakuumablassleitung an dem Punkt ist, wo sie sich an den Milchsammelbehälter anschließt.

7. Melkvorrichtung, umfassend eine Milchsammelvorrichtung nach einem der vorhergehenden Ansprüche, wobei die Melkvorrichtung ferner einen Kasten mit einem Rahmenwerk umfasst, auf dem ein beweglicher Roboterarm angeordnet ist, der eingerichtet ist, um Melkbecher anzusetzen, die mittels eines oder mehrerer Milchschläuche an den Milchsammelbehälter angeschlossen sind.

8. Melkvorrichtung nach Anspruch 7, wobei der eine oder die mehreren Milchschläuche an den Milchsammelbehälter symmetrisch zu einer Ebene A angeschlossen sind, wobei Ebene A eine Ebene senkrecht zu der Längsrichtung des Kastens durch das Zentrum des Milchsammelbehälters ist.

## Revendications

1. Dispositif de collecte de lait comportant un récipient (1) de collecte de lait doté d'une canalisation (3) d'alimentation en liquide de rinçage, d'au moins une arrivée (6) de lait, d'un tube (2) d'évacuation à vide et d'une évacuation (7) de liquide sur la face inférieure du récipient, l'alimentation en liquide de rinçage étant placée au sommet du récipient de collecte de lait et séparée du tube d'évacuation à vide, et étant agencée pour guider le liquide de rinçage sensiblement le long d'une paroi du récipient de collecte de lait, l'alimentation en liquide de rinçage étant agencée pour laver le pourtour du tube d'évacuation à vide avec du liquide de rinçage sur au moins deux côtés, **caractérisé en ce que** l'alimentation (3', 3" ; 3-1, 3-2) en liquide de rinçage est agencée pour fournir, à partir d'au moins deux directions, du liquide de rinçage au tube (2) d'évacuation à vide, les deux directions délimitant au moins un angle droit.

2. Dispositif de collecte de lait selon la revendication 1, les deux directions délimitant sensiblement un angle plat.

3. Dispositif de collecte de lait selon l'une quelconque des revendications précédentes, comportant au moins trois ouvertures d'alimentation en liquide de rinçage autour du tube d'évacuation à vide.

4. Dispositif de collecte de lait selon l'une quelconque des revendications précédentes, l'alimentation en liquide de rinçage étant réalisée sous la forme d'un conduit concentrique, en particulier une anfractuosité concentrique, autour du tube d'évacuation à vide.

5. Dispositif de collecte de lait selon l'une quelconque des revendications précédentes, l'alimentation en liquide de rinçage se raccordant au récipient de collecte de lait avec une courbure, la courbure présentant un rayon de courbure au moins constant, et de préférence régulièrement croissant dans la direction de l'alimentation en liquide de rinçage vers le récipient de collecte de lait.

6. Dispositif de collecte de lait selon l'une quelconque des revendications précédentes, l'alimentation en liquide de rinçage étant agencée pour fournir le liquide de rinçage dans le récipient de collecte de lait avec une composante de vitesse qui est perpendiculaire à une direction axiale du tube d'évacuation à vide, au point où il se raccorde au récipient de collecte de lait.

7. Dispositif de traite comportant un dispositif de collecte de lait selon l'une quelconque des revendications précédentes, lequel dispositif de traite comporte en outre un caisson doté d'une ossature, sur lequel est disposé un bras mobile de robot qui est agencé pour appliquer des gobelets trayeurs, lesquels gobelets trayeurs sont reliés au récipient de collecte de lait au moyen d'un ou plusieurs tubes à lait.

8. Dispositif de traite selon la revendication 7, le ou les tubes à lait étant reliés au récipient de collecte de lait symétriquement par rapport à un plan A, le plan A étant un plan perpendiculaire à la direction longitudinale du caisson passant par le centre du récipient de collecte de lait.
